(19) Europäisches Patentamt / European Patent Office / Office européen des brevets

(11) **EP 3 297 971 B1**

(12) # EUROPÄISCHE PATENTSCHRIFT

(45) Veröffentlichungstag und Bekanntmachung des Hinweises auf die Patenterteilung:
**16.03.2022 Patentblatt 2022/11**

(21) Anmeldenummer: **16722226.4**

(22) Anmeldetag: **12.05.2016**

(51) Internationale Patentklassifikation (IPC):
**C04B 37/00** (2006.01)   **F16L 9/10** (2006.01)
**F16L 13/007** (2006.01)

(52) Gemeinsame Patentklassifikation (CPC):
**C04B 37/005; C04B 37/006; C04B 37/008;**
**F16L 9/10; F16L 13/007;** C04B 2237/086;
C04B 2237/341; C04B 2237/343; C04B 2237/38;
C04B 2237/385; C04B 2237/704; C04B 2237/765;
C04B 2237/84

(86) Internationale Anmeldenummer:
**PCT/EP2016/060711**

(87) Internationale Veröffentlichungsnummer:
**WO 2016/184776 (24.11.2016 Gazette 2016/47)**

(54) **GASDICHTES, MEHRSCHICHTIGES VERBUNDROHR**

GAS-TIGHT COMPOSITE CERAMIC PIPE

TUYAU COMPOSITE EN CÉRAMIQUE ÉTANCHE AU GAZ

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität: **19.05.2015 EP 15168207**

(43) Veröffentlichungstag der Anmeldung:
**28.03.2018 Patentblatt 2018/13**

(73) Patentinhaber: **BASF SE**
**67056 Ludwigshafen am Rhein (DE)**

(72) Erfinder:
  • **KOLIOS, Grigorios**
    **67435 Neustadt (DE)**
  • **THATE, Sven**
    **67433 Neustadt (DE)**
  • **TELLAECHE HERRANZ, Carlos**
    **69126 Heidelberg (DE)**
  • **ZOELS, Bernd**
    **67269 Gruenstadt (DE)**

(74) Vertreter: **BASF IP Association**
    **BASF SE**
    **G-FLP-C006**
    **67056 Ludwigshafen (DE)**

(56) Entgegenhaltungen:
DE-A1-102006 038 713    JP-A- 2003 053 166
US-A1- 2012 003 128    US-A1- 2015 078 505

• Anonymous: "Fine Ceramics Offer a Wide Range of Thermal Conductivity", Fine Ceramics World , 2. September 2009 (2009-09-02), XP002759454, Gefunden im Internet: URL:http://global.kyocera.com/fcworld/char act/heat/thermalcond.html [gefunden am 2016-07-04]

EP 3 297 971 B1

**Beschreibung**

Die vorliegende Erfindung betrifft ein gasdichtes mehrschichtiges Verbundrohr mit einem Wärmedurchgangs-koeffizient von > 1000 W/m$^2$/K beinhaltend mindestens zwei Schichten, eine Schicht aus unporöser monolithischer Oxid-Keramik und eine Schicht aus oxidischer Faserverbundkeramik.

Endotherme Reaktionen stehen häufig am Anfang der Wertschöpfungskette der chemischen Industrie, beispielsweise bei der Spaltung von Erdölfraktionen, der Reformierung von Erdgas oder Naphtha, der Dehydrierung von Propan, der Dehydroaromatisierung von Methan zu Benzol oder der Pyrolyse von Kohlenwasserstoffen. Diese Reaktionen sind stark endotherm, d.h. Temperaturen zwischen 500 °C und 1700 °C sind erforderlich, um technisch und wirtschaftlich interessante Ausbeuten zu erreichen.

Zum Beispiel enthält der Prozess zur Herstellung von Synthesegas und Wasserstoff aus Erdgas oder Naphtha endotherme Reaktionsschritte, die bei hohen Drücken und Temperaturen durchgeführt werden. Der Standardprozess nach dem Stand der Technik ist die Reformierung von Erdgas mit Wasserdampf (Wasserdampf-reformierung) oder mit Kohlenstoffdioxid (Trocken-reformierung). Dieser Prozess erfordert einen Katalysator, der auf mehrere Reaktionsrohre verteilt ist. Die Reaktionsrohre sind in Öfen installiert und werden durch Brenner befeuert. Die Funktion der Rohrwände ist dabei die Übertragung des Wärmestroms von einer externen Wärmequelle in das Reaktionsvolumen und die hermetische Trennung des Reaktionsvolumens von der umgebenden Wärmequelle unter Erhaltung der Druckdifferenz zwischen den zwei Räumen. Die Rohre der Festbettreaktoren sind typischerweise zylindrisch mit einheitlichem Durchmesser über die gesamte Rohrlänge. Der Werkstoff der Rohre ist typischerweise Edelstahl; in einigen Fällen werden keramische Werkstoffe eingesetzt.

Technische Reformierungsprozesse werden bei Drücken bis 30 bar und Temperaturen bis 900 °C betrieben, wobei dieser Wert die Produktgastemperatur am Austritt der Reaktionsrohre repräsentiert. Der technische Prozess ist wärmetransport- und gleichgewichtslimitiert. Der Begriff "wärmetransportlimitiert" bedeutet, dass die Reaktionskinetik so schnell wird, dass lokal näherungsweise der Gleichgewichtsumsatz erreicht wird, jedoch kann die Reaktionswärme nicht ausreichend schnell über die Wand der Reaktionsrohre nachgeliefert werden. So stellt sich über die Länge und über den Querschnitt des Reaktionsrohres eine nennenswerte Differenz zur Wandtemperatur ein, die den Umsatz limitiert. Gleichgewichtslimitiert bedeutet, dass der Gleichgewichtsumsatz der Reaktion mit der Temperatur ansteigt. Bei einem Gemisch mit der gängigen Anfangszusammensetzung von $H_2O:CH_4$ = 3:1 mol/mol ist bei 900 °C und 30 bar der Gleichgewichtsumsatz auf 86,7 % limitiert. Bei der Verwendung von metallischen Reaktorwerkstoffen ist die Reaktionstemperatur durch die Temperaturbeständigkeit der metallischen Reaktorwerkstoffe und der eingesetzten Katalysatoren auf die genannten 900°C beschränkt.

Eine höhere Reaktionstemperatur von 1300°C oder höher wäre aus mehreren Gründen wünschenswert, insbesondere um einen höheren Gleichgewichtsumsatz (> 99,9 %) und um eine ausreichend hohe Reaktionsgeschwindigkeit der folgenden unkatalysierten Reaktionen zu erreichen, die für die Synthesegasherstellung relevant sind, beispielsweise:

$$CH_4 + H_2O \leftrightharpoons CO + 3H_2$$

$$CH_4 + CO_2 \leftrightharpoons 2CO + 2H_2$$

$$CH_4 \leftrightharpoons C + H_2$$

$$CO_2 + H_2 \leftrightharpoons CO + H_2O$$

$$CO_2 + C \leftrightharpoons 2CO.$$

Die Produktzusammensetzung ist hauptsächlich vom C:O:H-Verhältnis der Einsatzstoffe bestimmt. Demnach besteht keine Notwendigkeit, die Selektivität einzelner Reaktionen durch einen Katalysator zu erhöhen.

Diese Temperaturen von > 1300°C erfordern den Einsatz keramischer Werkstoffe, vorzugsweise von Oxidkeramiken. Die Vorteile von keramischen Werkstoffen, insbesondere Oxidkeramiken, sind hohe Temperaturbeständigkeit bis 1800 °C, chemische Passivität, Korrosionsbeständigkeit und hohe Festigkeit. Der größte Nachteil von keramischen Werkstoffen ist deren hohe Sprödigkeit. Diese Eigenschaft wird über die Bruchzähigkeit $K_{IC}$ beschrieben, die beispielsweise gemäß DIN EN ISO 12737 für Metalle, bzw. gemäß DIN EN ISO 15732 für monolithische Keramiken bestimmt wird. Für Stahl, einem Vertreter zäher Werkstoffe, beträgt $K_{IC} \approx 50\ MPa\ \sqrt{m}$. Für monolithische Keramiken, beispielsweise Zirkonoxid ($ZrO_2$) oder Korund ($Al_2O_3$) beträgt $K_{IC} \cong 3 - 5\ MPa\ \sqrt{m}$. Hierdurch sind monolithische Keramiken ungeeignet für Druckapparate mit einem Druck von > 0,5 bar, da diese Werkstoffe das Kriterium "Riss vor Bruch" nicht gewährleisten können, sondern ein plötzlicher, sich nicht ankündigender Bruch stattfinden könnte. Eine Alternative sind Faserverbundkeramiken bestehend aus oxidischen Fasern, die in einer porösen Matrix aus oxidischer Keramik eingebettet sind. Die Porosität von Faserverbundkeramiken kann Werte zwischen 25% und 50% annehmen. Die Vorteile von Faserverbundkeramiken sind hohe Temperaturbeständigkeit bis 1300 °C oder darüber, hohe Temperaturwechselbeständigkeit und ein quasi-duktiles Verformungs- und Bruchverhalten. Die Bruchzähigkeit von Faserverbundkeramiken kann Werte er-reichen von $K_{lc} \cong$ 10 - 50 $MPa \sqrt{m}$. Als Folge der porösen Struktur besitzen Faserverbundkeramiken eine geringere Dichte, einen niedrigeren Elastizitätsmodul und einen niedrigeren Wärmeleitfähigkeitskoeffizient gegenüber monolithischen Keramiken mit derselben chemischen Zusammensetzung. Die Tabelle 1 enthält eine Liste der relevanten Normen für die Bestimmung dieser Parameter.

Tabelle 1: Liste der relevanten Normen für die Bestimmung struktureller, mechanischer und thermophysikalischer Parameter für monolithische Keramiken und Verbundkeramiken.

| Parameter | Monolithische Keramik | Faserverbundkeramik |
|---|---|---|
| Dichte, Porosität | DIN EN 623-2 | DIN V ENV 1389 |
| E-Modul | DIN V ENV 843-2 | DIN EN 658-1 |
| Bruchzähigkeit[1] | DIN EN ISO 15732 | Single-edge-notch-bend[2] |
| Temperaturleitfähigkeitskoeffizient | DIN EN 821-2 | DIN V ENV 1159-2 |
| Spezifische Wärmekapazität | DIN EN 821-3 | DIN V ENV 1159-3 |

[1]: Die Bruchzähigkeit metallischer Werkstoffe wird gemäß DIN EN ISO 12737 bestimmt.

[2]: M. Kuntz. Risswiderstand keramischer Faserverbundwerkstoffe. Dissertation Universität Karlsruhe, Shaker Verlag, 1996.

Der Wärmeleitfähigkeitskoeffizient ist über die folgende Beziehung definiert:
Wärmeleitfähigkeitskoeffizient = Dichte x (spezifische Wärmekapazität) x Temperaturleitfähigkeitskoeffizient

Beispielhaft enthält die Tabelle 2 einen Vergleich zwischen den Eigenschaften monolithischer Keramiken und Faserverbundkeramiken auf der Basis von Aluminiumoxid.

Tabelle 2: Gegenüberstellung der physikalischen Eigenschaften von monolithischen Keramiken und Verbundkeramiken.

| Parameter | Monolithische Keramik Friatec Degussit® AL23 | Faserverbundkeramik WHIPOX® N610/45 |
|---|---|---|
| Porosität in % | 0 | 26 |
| Dichte in $\frac{g}{cm^3}$ | 3,8 | 2,9 |
| E-Modul in $GPa$ | 380 | 110 |
| Wärmeleitfähigkeitskoeffizient in $\frac{W}{m \cdot K}$ | 30 (@100°C) 5,5 (@1000°C) | 5,7 (@200°C) 2,7 (@1000°C) |

Nachteilig an der porösen Struktur von Faserverbundkeramiken ist ihre Untauglichkeit für die Herstellung von Druckapparaten mit einem Druck von > 0,5 bar. Ferner ist die schlechtere Wärmeleitfähigkeit im Vergleich zur unporösen monolithischen Keramik mit derselben chemischen Zusammensetzung nachteilig, d.h. wenn durch eine Schicht aus diesem Material ein Wärmestrom übertragen werden soll.

DE 2821595 A1 offenbart ein hochfestes Keramikverbundrohr, das ein Innenrohr aus Keramikmaterial und wenigstens ein auf das Innenrohr aufgeschrumpftes Außenrohr aus einem Metall- oder Keramikmaterial aufweist. Es findet sich kein Hinweis auf eine Faserverbundkeramik.

DE 3907087 A1 beschreibt einen Hochdruckbehälter mit einer Wandung aus einem Faserverbundwerkstoff auf einem Innenrohr aus Metall-Keramik-Pulver und einem Außenrohr aus Metall. Es findet sich kein Hinweis auf einen Mehrschichtaufbau mit einem keramischen Innenoder Außenrohr.

DE 102006038713 A1 offenbart einen druckfesten Körper, wie beispielsweise ein Druckrohr, bestehend aus einem Grundkörper aus Stahl, einer den Grundkörper außenseitig umschließenden ersten Schicht aus keramischem Faserverbundwerkstoff und zumindest einer auf der ersten Schicht angeordneten zweiten Schicht aus faserverstärktem Kunststoff und/oder faserverstärkter Keramik. Die zweite Schicht aus Kunststoff verbietet die Außenbeheizung des Rohres. Ausführungsbeispiele mit rein keramischen Außenrohren werden nicht erwähnt. Es findet sich kein Hinweis auf einen Mehrschichtaufbau mit einem keramischen Innenrohr oder einem Innenrohr aus Faserverbundkeramik.

DE 102012219870 A1 offenbart ein Verfahren zur Herstellung eines Verbundkörpers aus Stahl und eine den Grundkörper zumindest abschnittsweise außenseitig umschließende Schicht aus einem Faserverbundwerkstoff. Zur Ausbildung des Faserverbundwerkstoffs wird der Grundkörper mit einem Faserwerkstoff vor oder nach dem Umwickeln mit einem Harz imprägniert und erwärmt. Vorteilhaft ist, dass dieses Verfahren in situ durchgeführt werden kann, so dass eine Sanierung maroder Druckleitungen ohne Betriebsunterbrechung möglich ist. Es findet sich kein Hinweis auf einen Mehrschichtaufbau mit einem keramischen Innenrohr oder einem Innenrohr aus Faserverbundkeramik.

DE 102004049406 A1 beschreibt ein mehrschichtiges Formteil aus mindestens einem langfaserverstärkten Verbundmaterial (1) und mindestens einem kurzfaserverstärkten Verbundmaterial (2), das dadurch gekennzeichnet ist, dass das langfaserverstärkte Verbundmaterial (1) keramische Endlosfasern und keramisches Matrixmaterial enthält, das kurzfaserverstärkte Verbundmaterial (2) keramische Fasern mit einer mittleren Länge in einem Bereich von 1 bis 50 mm und keramisches Matrixmaterial enthält, wobei das langfaserverstärkte Verbundmaterial (1) und das kurzfaserverstärkte Verbundmaterial (2) flächig fest miteinander verbunden sind. Es findet sich kein Hinweis auf eine Kombination einer keramischen Schicht mit einer Faserverbundschicht.

US 6,733,907 beschreibt einen Verbund aus einer innenliegenden keramischen Trägerstruktur und einer außenliegenden keramischen Wärmedämmschicht. Die Wärmedämmschicht weist eine Dicke von 2 bis 5 mm auf und eine Porosität von > 20 % auf. Die Porosität der Struktur verleiht sowohl monolithischen Keramiken als auch Faserverbundkeramiken eine schlechtere Wärmeleitfähigkeit gegenüber einer unporösen monolithischen Keramik mit derselben chemischen Zusammensetzung. Die keramische Trägerstruktur kann aus Endlosfasern in einer keramischen Matrixstruktur bestehen und weist eine Dicke von 3 bis 10 mm auf. Es wird beschrieben, dass der E-Modul und der Wärmeleitfähigkeitskoeffizient der Wärmedämmschicht jeweils niedriger ist als der entsprechende Wert der keramischen Trägerstruktur. Nachteilig im Sinn der oben formulierten Anforderung an die Funktion der Reaktionsrohre ist hierbei die Untauglichkeit der porösen Verbundstruktur, zwei Räume mit einer nennenswerten Druckdifferenz voneinander zu trennen. Ferner erlaubt die schlechte Wärmeleitung der Verbundstruktur nicht, den erforderlichen Wärmestrom für die endotherme Reaktion ohne Überhitzung der Wand zu übertragen.

US 2015/078505 beschreibt ein gasdichtes, zweischichtiges Verbundrohr aus Siliciumcarbid zur Endlagerung von nuklearen Kernbrennstoffen beinhaltend eine dichte monolithische SiC-Schicht und eine poröse SiC-SiC-Faserverbundkeramikschicht. Der Vorteil von SiC-Keramiken innerhalb der Familie der Keramiken ist die vergleichsweise hohe Wärmeleitfähigkeit und die hohe Temperaturwechselbeständigkeit. Der Nachteil von SiC-Keramiken ist die vergleichsweise geringe chemische Beständigkeit im Bezug auf oxidierende oder aufkohlende Atmosphären. Die thermodynamische Analyse von Eckel et al (NASA Technical Memorandum, Wyoming, September 12-16, 1989) und Hallum et al. (NASA Technical Memorandum, Chicago, Illinois, April 27-May 1, 1986) zeigen, dass im technisch relevanten Bereich von 0,1% bis 1% Volumenanteile für Methan, CO und/oder Wasserdampf Oxidations- Reduktionszyklen stattfinden können, so dass die SiC-Keramik korrodiert. Figur 4 von Hallum et al. zeigt den Einfluss der Temperatur bei dem Sinterungsprozess von SiC-Keramiken; ab einer Temperatur von 1100°C wird die Korrosion so stark, dass sich einzelne Kristalle aus der Oberfläche lösen. Diese Korrosion wird ferner verstärkt durch eine wechselnde Atmosphäre zwischen reduzierend und oxidierend. Folglich werden SiC-Keramiken als Reaktor-Materialien für endotherme Reaktionen in oxidierenden sowie zwischen reduzierend und oxidierend periodisch wechselnden Reaktionsatmosphären nicht in Betracht gezogen.

US 5,881,775 beschreibt ein zwei-schichtiges Verbundrohr mit einer inneren Schicht aus unporösem monolithischen Keramikmaterial, das Oxidmaterial wie Mullit oder Aluminiumoxid enthält, und einer äußeren Verstärkungsschicht aus Faserverbundkeramik beinhaltend Oxidmaterial, z.B. Mullit oder Aluminiumoxid. Eine allgemeine Wanddicke der beiden Schichten wird in US 5,881,775 nicht offenbart. Im Beispiel von US 5,881,775 ist ein zweischichtiges Rohr mit einem inneren Rohr aus Aluminiumoxid mit 10 cm Außendurchmesser und 0,64 cm Wandstärke beschrieben.

US 2012/0003128 beschreibt ein Verbindungsstück zwischen einem Rohr aus unporöser monolithischer Keramik und metallischen Zuleitungen. Das keramische Rohr weist eine Porosität von < 5% auf. US 2012/0003128 basiert auf einer kraftschlüssigen Verbindung zwischen dem Keramikrohr und dem metallischen Anschlussteil, der den Endabschnitt des Keramikrohres umgibt. Der Kraftschluss wird über zwei konzentrisch angeordnete Metallringe gewährleistet, wobei der innere Ring Teil der Anschlussleitung ist. Der äußere Schrumpfring hat eine geringere thermische Ausdehnung als der innere Ring; dadurch soll die Tendenz des inneren Schrumpfringes unterdrückt werden, sich bei Erwärmung vom keramischen Rohr zu lösen. Nachteilig an dieser Lösung ist, dass, bedingt durch die Wahl metallischer Schrumpfringe, die radiale Anpresskraft zwischen dem Keramikrohr und dem inneren Schrumpfring mit der Temperatur variiert. Im schlimmsten Fall kann die Dichtigkeit der Verbindung beeinträchtigt oder das Keramikrohr beschädigt werden. Ferner bleibt in US 2012/0003128 der größte Abschnitt des keramischen Rohres, der nicht von den Schrumpfringen umgeben wird, ungeschützt, d.h. das Problem der Sprödigkeit dieses Materials bleibt ungelöst.

Ein Rohr beinhaltend mindestens zwei Schichten, eine Schicht aus unporöser monolithischer Oxid-Keramik und eine Schicht aus oxidischer Faserverbundkeramik ist nicht mit einer keramischen Hohlfasern gemäß JP 2003053166 zu verwechseln: Die keramische Hohlfaser, die in der Membrantechnik eingesetzt wird, weist ein Kapillarrohr mit einem äußeren Durchmesser von ca. 0,5 bis 4 mm auf. Die Schriften US4222977 und US5707584 beschreiben die Herstellung keramischer Hohlfasermembranen. Die Rohrwand kann eine Wandstärke zwischen 30 µm und 500 µm aufweisen und ist monolithisch, d.h. ihre mechanischen Eigenschaften sind identisch zu den Eigenschaften gewöhnlicher monolithischer Keramiken. Das bedeutet, dass keramische Hohlfasern starr und spröde und damit ungeeignet sind, um ein quasi-duktiles Verformungsverhalten wie bei Faserverbundkeramiken zu erzielen. Durch die in JP 2003053166 beschriebene Kombination unporöser und poröser Keramik bleibt das Kapillarrohr spröde und bruchanfällig.

Demnach werden im Stand der Technik bislang keine Materialien offenbart, die für die Herstellung von Reaktionsrohren, einsetzbar bei Betriebsdrücken von 1 bis 50 bar, Reaktionstemperaturen bis 1400°C und von einer äußeren Wärmequelle - üblicherweise einer Heizkammer - beheizbar, geeignet wären.

Die Lösungen, die auf der Kombination einer Armierung aus Faserverbundkeramik und metallischen Rohren aufbauen, sind ungeeignet, um die thermischen und chemischen Einschränkungen der metallischen Werkstoffe, d.h. maximale Reaktionstemperatur bis ca. 950°C und korrosionsanfällig bei wechselnd oxidierenden/reduzierender Atmosphäre, zu überwinden. Die Lösungen, die auf der schichtweisen Kombination einer Armierung aus Faserverbundkeramik und keramischen Formkörpern aufbauen, enthalten keine Lehren (i) zum effektiven Wärmetransport durch die Schichten und (ii) zur chemischen Resistenz und (iii) zur hermetischen Abgrenzung des Reaktionsvolumens von der umgebenden Heizkammer bei einer Druckdifferenz bis 50 bar. Insbesondere sind hermetisch dichte Übergänge zwischen den Rohrenden und metallischen Leitungen für die Einleitung der Reaktanden und für die Ableitung der Produktströme in die bzw. aus den Reaktionsrohren ungeklärt.

Die Abgrenzung des Reaktionsvolumens von der umgebenden Heizkammer wird im Stand der Technik in Abhängigkeit von der benötigten Temperatur auf nachfolgende Arten gelöst. Bei Temperaturen in einem Bereich bis < 300°C werden typischerweise Polymere als Dichtungselemente eingesetzt. Ferner besteht die Möglichkeit der Imprägnierung mit Polymeren. Bei Temperaturen bis < 400°C werden metallische Hülsen verwendet, die stoffschlüssig unter Verwendung von Löt- oder Klebemittel angebracht werden. Bei Temperaturen bis < 1000°C werden die metallischen Hülsen formschlüssig aufgeschrumpft (z.B. DE 1995105401). Die besagten Metallhülsen müssen für diesen Verwendungszweck dünnwandig im Bereich von 0,3 bis 1 mm sein. Mit solchen Metallhülsen könnten bei hohen Temperaturen oberhalb 800 °C nur Druckdifferenzen von max. 3 bar erreicht werden, da das Metall ansonsten anfängt zu fließen.

Die Aufgabe der vorliegenden Erfindung war demnach die Bereitstellung eines geeigneten Werkstoffes für Reaktionsrohre, die folgendes Eigenschaftsprofil aufweisen: (i) wärmedurchlässig mit einem Wärmedurchgangskoeffizient > 1000 W/m²/K

(ii) temperaturbeständig bis ca. 1400°C,
(iii) druckbeständig bis ca. 50 bar bzw. beständig bei Druckdifferenzen bis ca. 100 bar, (iv) korrosionsbeständig gegen reduzierende und gegen oxidierende Atmosphäre mit einem Sauerstoffpartialdruck von $10^{-25}$ bar bis 10 bar und (v) temperaturwechselbeständig gemäß DIN EN 993-11.

Ferner war Aufgabe der vorliegenden Erfindung, eine Verbindungseinheit / ein Verbindungsstück zwischen dem Werkstoff, d.h. dem Reaktorrohr, einerseits und den metallischen gasführenden Leitungen für die Produkte und Edukte andererseits aufzuzeigen, die ebenso (i) temperaturbeständig bis oberhalb 1100°C, (ii) druckbeständig bis 40 bar, (iii) korrosionsbeständig gegen oxidierende und gegen reduzierende Atmosphäre und (iv) temperaturwechselbeständig ist. Gelöst wurde die Aufgabe mit einem mehrschichtigen Verbundrohr mit einem Wärmedurchgangskoeffizient von > 1000 W/m²/K beinhaltend mindestens zwei Schichten, eine innere Schicht aus unporöser monolithischer Oxid-Keramik und eine äußere Schicht aus oxidischer Faserverbundkeramik, wobei die Dicke der Schicht aus oxidischer Faserverbundkeramik von 0,5 mm bis 3 mm beträgt, wobei die Dicke der Schicht aus monolithischer Oxid-Keramik von 0,5 mm bis 45 mm beträgt, wobei die gesamte Wandstärke aus mindestens zwei Schichten 1 mm bis 50 mm beträgt, wobei die Dicke der Schicht aus oxidischer Faserverbundkeramik weniger als 90 % der gesamten Wandstärke beträgt, wobei der Rohrinnendurchmesser des Verbundrohres 20 mm bis 1000 mm beträgt, wobei die zwei Schichten kraftschlüssig oder stoffschlüssig miteinander verbunden sind und ein Bauteil bilden und wobei unter "oxidischer Faserverbundkeramik" eine Matrix aus oxidischen keramischen Partikeln verstanden wird, die keramische, oxidische und/oder nicht-oxidische Fasern, enthält.

Die zwei Schichten haften aneinander durch kraftschlüssige oder stoffschlüssige Verbindungen. Relevante kraftschlüssige Verbindungen sind beispielsweise Schraubverbindungen oder Pressverbindungen. Relevante stoffschlüssige Verbindungen für diese Erfindung sind Löten, Kleben, Sintern. Alle Verbindungsarten gehören zum Stand der Technik (W. Tochtermann, F. Bodenstein: Konstruktionselemente des Maschinenbaues, Teil 1. Grundlagen; Verbindungselemente; Gehäuse, Behälter, Rohrleitungen und Absperrvorrichtungen. Springer-Verlag, 1979).

Die Wand des mehrschichtigen Verbundrohrs beinhaltet zumindest bereichsweise zwei Schichten, eine Schicht aus unporöser monolithischer Oxid-Keramik und eine Schicht aus oxidischer Faserverbundkeramik; d.h. es kann sich bei dem mehrschichtigen Verbundrohr auch um einen Verbundrohr-Abschnitt handeln. Beispielsweise sei ein zoniertes oder punktuelles nur bereichsweise aus zwei Schichten bestehendes Verbundrohr genannt. Bevorzugt beinhaltet jedoch die gesamte Wand des Verbundrohres, die einer äußeren Temperatur, z.B. durch eine Heizkammer, von > 1100°C ausgesetzt ist, mindestens zwei Schichten, eine Schicht aus unporöser monolithischer Oxid-Keramik und eine Schicht aus oxidischer Faserverhundkeramik.

Das mehrschichtige Verbundrohr weist in dem Rohrabschnitt, der einer äußeren Temperatur, z.B. durch eine Heizkammer, von > 1100°C ausgesetzt ist, vorteilhaft keine metallischen Schichten auf.

Vorteilhaft ist das Innenrohr umwickelt mit einer Schicht aus oxidischer Faserverbundkeramik. Die zwei Schichten können kraftschlüssig oder stoffschlüssig miteinander verbunden und ein Bauteil bilden. Die Eigenschaften dieses Bauteils sind durch die Temperaturbeständigkeit und das Verformungsverhalten der Schicht aus oxidischer Faserverbundkeramik bestimmt. Die Dichtigkeit ist durch das Innenrohr aus Oxid-Keramik gegeben. Bei Verwendung eines oxidkeramischen Innenrohrs weist die Innenseite der Rohrwand eine hohe chemische Beständigkeit und Abriebfestigkeit, mit einer Härte > 14000 MPa für Aluminiumoxid, > 12000 MPa für Zirkonoxid, auf.

Bei 1400°C sind beispielsweise Aluminiumoxid und Magnesiumoxid über den gesamten Bereich von einem Sauerstoffpartialdruck von $10^{-25}$ bar bis 10 bar beständig, während alle anderen keramischen Werkstoffe einen Übergang zwischen Reduktion und Oxidation durchlaufen und dadurch korrodieren (Darken, L. S., & Gurry, R. W. (1953). Physicalchemistry of metals. McGraw-Hill).

Der Rohrinnendurchmesser des mehrschichtigen Verbundrohres beträgt 20 mm bis 1000 mm, bevorzugt 50 mm bis 800 mm, insbesondere 100 mm bis 500 mm. Die gesamte Wandstärke aus mindestens zwei Schichten beträgt 1 mm bis 50 mm, bevorzugt 1 mm bis 30 mm, insbesondere 2 mm bis 20 mm. Dabei beträgt die Dicke der Schicht aus oxidischer Faserverbundkeramik weniger als 90 %, bevorzugt weniger als 50 %, insbesondere weniger als 25 % der gesamten Wandstärke; vorteilhaft beträgt die Dicke der Schicht aus oxidischer Faserverbundkeramik mindestens 10 % der gesamten Wandstärke. Die Dicke der Schicht aus monolithischer Oxid-Keramik beträgt von 0,5 mm bis 45 mm, bevorzugt von 1 mm bis 25 mm, besonders bevorzugt von 3 mm bis 15 mm. Die Dicke der Schicht aus oxidischer Faserverbundkeramik beträgt von 0,5 mm bis 3 mm.

Die Länge des mehrschichtigen Verbundrohres beträgt vorteilhaft 0,5 bis 20 m, bevorzugt 1 bis 10 m, insbesondere 1,5 bis 7 m.

Das erfindungsgemäße mehrschichtige Verbundrohr weist vorteilhaft eine offene Porösität von $\varepsilon$ < 5 %, bevorzugt $\varepsilon$ < 4 %, besonders bevorzugt $\varepsilon$ < 3 %, ferner bevorzugt $\varepsilon$ < 2 %, insbesondere $\varepsilon$ < 1 %, auf. Das mehrschichtige Verbundrohr ist besonders vorteilhaft gasdicht. Unter dem Begriff "gasdicht" wird ein Festkörper verstanden, der gemäß DIN EN 623-2 eine offene Porosität von Null besitzt. Die zulässige Messungenauigkeit liegt bei < 0,3 %.

Die Dichte der unporösen monolithischen Oxid-Keramik ist vorteilhaft größer als die Dichte der oxidischen Faserverbundkeramik. Die Dichte der unporösen monolithischen Oxid-Keramik beträgt vorteilhaft zwischen 1000 $\frac{kg}{m^3}$ und 7000 $\frac{kg}{m^3}$, insbesondere zwischen 2000 $\frac{kg}{m^3}$ und 5000 $\frac{kg}{m^3}$, beispielsweise 2800 $\frac{kg}{m^3}$ für Mullit (ca. 70% Aluminiumoxid) oder 3700 $\frac{kg}{m^3}$ für Aluminiumoxid mit einer Reinheit > 99,7%. Die Dichte der Schicht aus Faserverbundkeramik beträgt zwischen 500 $\frac{kg}{m^3}$ und 3000 $\frac{kg}{m^3}$. Das Verhältnis der Dichten der monolithischen Keramik und der Faserverbundkeramik in der Verbundstruktur beträgt vorteilhaft zwischen 1:1 und 3:1, insbesondere zwischen 1:1 und 2:1.

Das materialabhängige Elastizitätsmodul der unporösen monolithischen Oxid-Keramik ist vorteilhaft größer als das Elastizitätsmodul der oxidischen Faserverbundkeramik. Das Elastizitätsmodul der unporösen monolithischen Oxid-Keramik beträgt vorteilhaft zwischen 100 GPa und 500 GPa, insbesondere zwischen 150 GPa und 400 GPa, beispielsweise 150 GPa für Mullit (ca. 70% Aluminiumoxid) oder 380 GPa für Aluminiumoxid mit einer Reinheit > 99,7%. Das Elastizitätsmodul der Schicht aus Faserverbundkeramik beträgt zwischen 40 GPa und 200 GPa. Diese Werte gelten bei 25°C. Das Verhältnis der Elastizitätsmoduln der monolithischen Keramik und der Faserverbundkeramik in der Verbundstruktur beträgt vorteilhaft zwischen 1:1 und 5:1, insbesondere zwischen 1:1 und 3:1.

Der materialabhängige Wärmeleitfähigkeitskoeffizient der unporösen monolithischen Oxid-Keramik ist vorteilhaft größer als der Wärmeleitfähigkeitskoeffizient der oxidischen Faserverbundkeramik. Der Wärmeleitfähigkeitskoeffizient der unporösen monolithischen Oxid-Keramik beträgt vorteilhaft zwischen $1 \frac{W}{m \cdot K}$ und $50 \frac{W}{m \cdot K}$, insbesondere zwischen $2 \frac{W}{m \cdot K}$ und $40 \frac{W}{m \cdot K}$, beispielsweise $6 \frac{W}{m \cdot K}$ für Mullit (ca. 70% Aluminiumoxid) oder $30 \frac{W}{m \cdot K}$ für Aluminiumoxid mit einer Reinheit > 99,7%. Der Wärmleitfähigkeitskoeffizient der Schicht aus Faserverbundkeramik beträgt zwischen $0,5 \frac{W}{m \cdot K}$ und $10 \frac{W}{m \cdot K}$ bevorzugt zwischen $1 \frac{W}{m \cdot K}$ und $5 \frac{W}{m \cdot K}$. Diese Werte gelten bei 25°C. Das Verhältnis der Wärmeleitfähigkeitskoeffizienten der monolithischen Keramik und der Faserverbundkeramik in der Verbundstruktur beträgt vorteilhaft zwischen 1:1 und 10:1, insbesondere zwischen 1:1 und 5:1

Der Druckreaktor ist für folgende Druckbereiche ausgelegt; vorteilhaft 0,1 $bar_{abs}$ - 100 $bar_{abs}$, bevorzugt 1 $bar_{abs}$ - 70 $bar_{abs}$, weiter bevorzugt 1,5 $bar_{abs}$ - 50 $bar_{abs}$, insbesondere 5 $bar_{abs}$ - 30 $bar_{abs}$.

Die Druckdifferenz zwischen der Reaktionskammer und der Heizkammer beträgt vorteilhaft von 0 bar bis 100 bar, bevorzugt von 0 bar und 70 bar, weiter bevorzugt von 0 bar bis 50 bar, insbesondere von 0 bar bis 30 bar (Kapitel Cb: Wärmedurchgang, VDI-Wärmeatlas, 8. Auflage, 1997). Gemäß dieser Definition gilt:

$$k_{loc} = \frac{1}{R_w \cdot A}, \text{ wobei}$$

$$R_w = \sum_{j=1}^{n} \left(\frac{\delta}{\lambda \cdot A_m}\right)_j$$

$$A_{m,j} = \left(\frac{A_1 - A_2}{\ln\frac{A_1}{A_2}}\right)_j$$

Dabei bedeuten die Symbole:

$R_w$: Wärmedurchgangswiderstand einer mehrschichtigen zylindrischen Wand in $\frac{K}{W}$.,

$k_{loc}$: Wärmedurchgangskoeffizient einer mehrschichtigen zylindrischen Wand in $\frac{W}{m^2\,K}$,

$A$: Zylindrische Mantelfläche in $m^2$,

$\lambda$: Wärmeleitfähigkeitskoeffizient einer homogenen Schicht in $\frac{W}{m\,K}$,

$\delta$: Dicke einer homogenen Schicht in m,

$n$: Anzahl der Schichten einer mehrschichtigen zylindrischen Wand,
die Indizes:

1: Innenseite einer zylindrischen Schicht,
2: Außenseite einer zylindrischen Schicht,

m: Mittlere Fläche

Das erfindungsgemäße mehrschichtige Verbundrohr kann über seine Länge einen variablen Querschnitt und eine variable Wandstärke haben. Beispielsweise kann das mehrschichtige Verbundrohr in Strömungsrichtung der Gase trichterförmig zu- oder abnehmen, wobei ein in Strömungsrichtung enger werdenden Querschnitt vorteilhaft für Festbetten ist und ein weiter-werdenden Querschnitt vorteilhalft für Wirbelschichten.

An den zwei Enden des mehrschichtigen Verbundrohres kann der Randbereich der äußeren Schicht vorteilhaft versiegelt sein. Die versiegelten Enden dienen als Übergänge zur gasdichten Verbindung des Verbundrohres mit metallischen gasführenden Leitungen, Verteilern, Sammlern oder Durchführungen durch die Hülle der umgebenden Heizkammer.

Als unporöse monolithische Oxid-Keramik können alle dem Fachmann bekannten oxidischen Keramiken verwendet werden, insbesondere analog dem Informationszentrum Technische Keramik (IZTK): Brevier technische Keramik. Fahner Verlag, Lauf (2003). Bevorzugt sind unporöse monolithische Oxid-Keramiken mit mindestens 99 Gew-% $Al_2O_3$ und/oder Mullit. Als unporöse Keramik können insbesondere Haldenwanger Pythagoras 1800Z™ (Mullit), Alsint 99,7™ oder Friatec Degussit® AL23 (Aluminiumoxid) zum Einsatz kommen.

Die Faserverbundwerkstoffe sind charakterisiert durch eine Matrix aus keramischen Partikeln zwischen den keramischen Fasern, insbesondere Langfasern, als Wickelkörper oder als Textil eingebettet sind. Es wird von faserverstärkter Keramik, Verbundkeramik oder auch Faserkeramik gesprochen. Matrix und Faser können dabei im Prinzip aus allen bekannten keramischen Werkstoffen bestehen, wobei in diesem Zusammenhang auch Kohlenstoff als keramischer Werkstoff behandelt wird.

Unter "oxidischer Faserverbundkeramik" wird eine Matrix aus oxidischen keramischen Partikeln verstanden, die keramische, oxidische und/oder nicht-oxidische Fasern, enthält.

Bevorzugte Oxide der Fasern und/oder der Matrix sind Oxide eines Elementes aus der Gruppe: Be, Mg, Ca, Sr, Ba, Seltene Erden, Th, U, Ti, Zr, Hf, V, Nb, Ta, Cr, Mo, W, Mn, Fe, Co, Ni, Zn, B, Al, Ga, Si, Ge, Sn, Li, Na, K, Rb, Cs, Re, Ru, Os,Ir, Pt, Rh, Pd, Cu, Ag, Au, Cd, in, Tl, Pb, P, As, Sb, Bi, S, Se, Te, sowie Mischungen dieser Oxide.

Die Mischungen sind sowohl als Material für die Faser als auch für die Matrix vorteilhaft geeignet. Faser und Matrix müssen generell nicht aus demselben Material sein.

Grundsätzlich sind nicht nur binäre, sondern auch tertiäre und höhere Mischungen geeignet und von Bedeutung. In einer Mischung können die einzelnen Bestandteile in gleicher molarer Menge vorkommen, vorteilhaft sind aber Mischungen mit stark unterschiedlicher Konzentration der einzelnen Bestandteile der Mischung, bis hin zu Dotierungen, bei denen eine Komponente in Konzentrationen von < 1 % vorkommt.

Besonders vorteilhaft sind folgende Mischungen: Binäre und ternäre Mischungen aus Aluminiumoxid, Zirkoniumoxid und Yttriumoxid (z.B. Zirkoniumoxidverstärktes Aluminiumoxid); Mischungen aus Siliziumcarbid und Aluminiumoxid; Mischungen aus Aluminiumoxid und Magnesiumoxid (MgO-Spinell); Mischungen aus Aluminiumoxid und Siliziumoxid (Mullit); Mischung aus Aluminium- und Magnesiumsilikate, Ternäre Mischung aus Aluminiumoxid, Siliziumoxid und Magnesiumoxid (Cordierit); Steatit (Magnesiumsilikat); Zrikonoxid-verstärktes Aluminiumoxid; Stabilisiertes Zirkoniumoxid ($ZrO_2$): Stabilisatoren in Form von Magnesiumoxid (MgO), Calciumoxid (CaO) oder Yttriumoxid ($Y_2O_3$), gegebenenfalls kommen auch Ceroxid ($CeO_2$), Scandiumoxid ($SCO_3$) oder Ytterbiumoxid ($YbO_3$) als Stabilisatoren zum Einsatz; ferner Aluminiumtitanat (stöchiometrische Mischung von Aluminiumoxid und Titanoxid); Siliziumnitrid und Aluminiumoxid (Siliziumaluminiumoxinitride SIALON).

Als zirkoniumoxidverstärktes Aluminiumoxid wird vorteilhaft $Al_2O_3$ mit 10 bis 20 Mol-% $ZrO_2$ eingesetzt. Zur Stabilisierung von $ZrO_2$ kann vorteilhaft 10 bis 20 Mol-% CaO, bevorzugt 16 Mol-%, 10 bis 20 Mol-% MgO, bevorzugt 16, oder 5 bis 10 Mol-% $Y_2O_3$, bevorzugt 8 Mol-% ("vollstabilisiertes Zirkonoxid") oder 1 bis 5 Mol-% $Y_2O_3$, bevorzugt 4 Mol-% ("teilstabilisiertes Zirkonoxid") verwendet werden. Als ternäre Mischung sind z.B. 80% $Al_2O_3$, 18,4% $ZrO_2$ und 1,6% $Y_2O_3$ vorteilhaft.

Neben den genannten Materialien (Mischungen und Einzelbestandteile) sind auch Fasern aus Basalt, Bornitrid, Wolframcarbid, Aluminiumnitrid, Titandioxid, Bariumtitanat, Bleizirkonattitanat und/oder Borcarbid in oxid-keramischer Matrix denkbar.

Um eine gewünschte Armierung durch die zumindest zwei Schichten zu erzielen, können die Fasern des faserverstärkten Kohlenstoffs radial umlaufend und/oder sich kreuzend auf der ersten Schicht der unporösen Keramik angeordnet sein.

Als Fasern kommen Verstärkungsfasern in Frage, die in die Klassen oxidische, carbidische, nitridische Fasern bzw. C-Fasern und SiBCN-Fasern fallen. Insbesondere ist vorgesehen, dass die Fasern des keramischen Verbundwerkstoffes Aluminiumoxid-, Mullit-, Siliziumcarbid-, Zirkonoxid- und/oder Kohlenstoff-Fasern sind. Mullit besteht dabei aus Mischkristallen aus Aluminiumoxid und Siliziumoxid. Bevorzugt ist die Verwendung von Fasern aus Oxidkeramik ($Al_2O_3$, $SiO_2$, Mullit) oder aus Nichtoxidkeramik (C, SiC).

Es kommen vorteilhaft kriechbeständige Fasern zum Einsatz, d. h. Fasern, die im Kriechbereich - im Temperaturbereich bis 1400 °C - keine oder minimale zeitliche Zunahme der bleibenden Verformung, also der Kriechdehnung zeigen. Die Firma 3M gibt für die NEXTEL-Fasern folgende Grenztemperaturen an für die bleibende Dehnung von 1 % nach 1000 h unter Zugbelastung von 70 MPa an: NEXTEL 440: 875 °C, NEXTEL 550 und NEXTEL 610: 1010 °C, NEXTEL 720: 1120 °C an (Referenz: Nextel™ Ceramic Textiles Technical Notebook, 3M, 2004).

Die Fasern haben vorteilhaft einen Durchmesser zwischen 10 und 12 μm. Sie sind vorteilhaft miteinander - üblicherweise mit Leinwand- oder Satinbindung - zu Textilbahnen verwoben, zu Schläuchen gestrickt oder als Faserbündel um eine Form gewickelt. Zur Herstellung des keramischen Verbundsystems werden die Faserbündel oder -gewebe beispielsweise mit einem Schlicker, der die Komponenten der späteren keramischen Matrix, vorteilhaft $Al_2O_3$ oder Mullit, enthält, infiltriert (Schmücker, M. (2007), Faserverstärkte oxidkeramische Werkstoffe, Materialwissenschaft und Werkstofftechnik, 38(9), 698-704). Durch Wärmebehandlung bei > 700 °C entsteht schließlich eine hochfeste Verbundstruktur aus den Keramikfasern und der keramischen Matrix mit einer Zugfestigkeit von vorteilhaft > 50 MPa, bevorzugt > 70 MPa, weiter bevorzugt > 100MPa, insbesondere > 120MPa.

Bevorzugter Weise wird als keramischer Faserverbundwerkstoff SiC/ $Al_2O_3$, SiC/Mullit, C/ $Al_2O_3$, C/Mullit, $Al_2O_3$/$Al_2O_3$, $Al_2O_3$/Mullit, Mullit/ $Al_2O_3$ und/oder Mullit/Mullit eingesetzt. Dabei bezeichnet das Material vor dem Schrägstrich den Fasertyp und das Material nach dem Schrägstrich den Matrixtyp. Als Matrixsystem für die keramische Faserverbundstruktur können auch Siloxane, Si- Precursoren und unterschiedlichste Oxide, wie zum Beispiel auch Zirkonoxid, eingesetzt werden. Bevorzugt enthält der keramische Faserverbundwerkstoff mindestens 99 Gew-% $Al_2O_3$ und/oder Mullit.

In der vorliegenden Erfindung werden bevorzugt Faserverbundwerkstoffe auf der Basis oxidkeramischer Fasern, beispielsweise 3M™ NEXTEL™ 312, NEXTEL™ 440, NEXTEL™ 550, NEXTEL™ 610 oder NEXTEL™ 720 eingesetzt. Besonders bevorzugt ist die Verwendung von NEXTEL 610 und / oder NEXTEL 720.

Die Matrix weist einen Füllgrad an Fasern (Volumenanteil der Fasern in der Verbundstruktur) von 20 bis 40 % auf, der gesamte Feststoffgehalt der Verbundstruktur beträgt zwischen 50 und 80 %. Faserverbundkeramiken auf Basis oxidischer keramischer Fasern sind chemisch beständig in oxidierender und in reduzierender Gasatmosphäre (d. h. keine Gewichtsänderung nach Lagerung in Luft bei 1200 °C über 15h (Referenz: Nextel™ Ceramic Textiles Technical Notebook, 3M, 2004)) und thermisch beständig bis über 1300 °C. Faserverbundkeramiken besitzen ein quasi duktiles Verformungsverhalten. Damit sind sie temperaturwechselbeständig und besitzen ein quasi zähes Bruchverhalten. So kündigt sich das Versagen eines Bauteils an, bevor es bricht.

Der Faserverbundwerkstoff weist vorteilhaft eine Porosität von 20 % bis 50 % auf; sie ist demnach nicht gasdicht gemäß Definition in DIN 623-2.

Der Faserverbundwerkstoff weist vorteilhaft eine Langeinsatztemperatur von bis zu 1500 °C, bevorzugt bis zu 1400 °C, besonders bevorzugt bis zu 1300 °C auf.

Der Faserverbundwerkstoff weist vorteilhaft eine Festigkeit > 50 MPa, bevorzugt > 70 MPa, besonders bevorzugt > 100 MPa, insbesondere > 120 MPa auf.

Der Faserverbundwerkstoff weist vorteilhaft eine Streckgrenze elastischer Verformung von 0,2 bis 1 % auf.

Der Faserverbundwerkstoff weist vorteilhaft eine Temperaturwechselbeständigkeit gemäß DIN EN 993-11 auf.

Der Faserverbundwerkstoff weist vorteilhaft einen thermischen Wärmeausdehnungskoeffizient [ppm/K] von 4 bis 8,5 auf.

Der Faserverbundwerkstoff weist vorteilhaft eine thermische Leitfähigkeit von 0,5 bis 5 $\frac{W}{m \cdot K}$ auf.

Der keramische Faserverbundwerkstoff kann durch CVI (Chemical Vapour Infiltration) - Verfahren, Pyrolyse, insbesondere LPI (Liquid Polymer Infiltration) -Verfahren oder durch chemische Reaktion wie LSI (Liquid Silicon Infiltration) -Verfahren hergestellt werden.

Die Versiegelung beider Enden oder eines Endes des mehrschichtigen Verbundrohres kann auf vielfache Art und Weise durchgeführt werden:

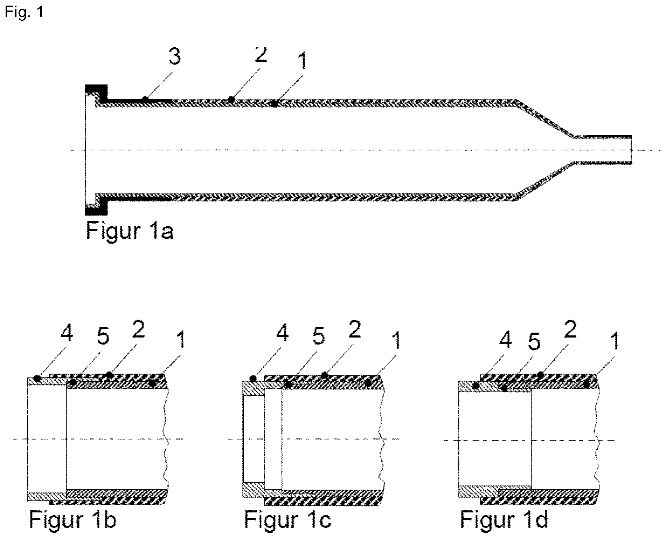

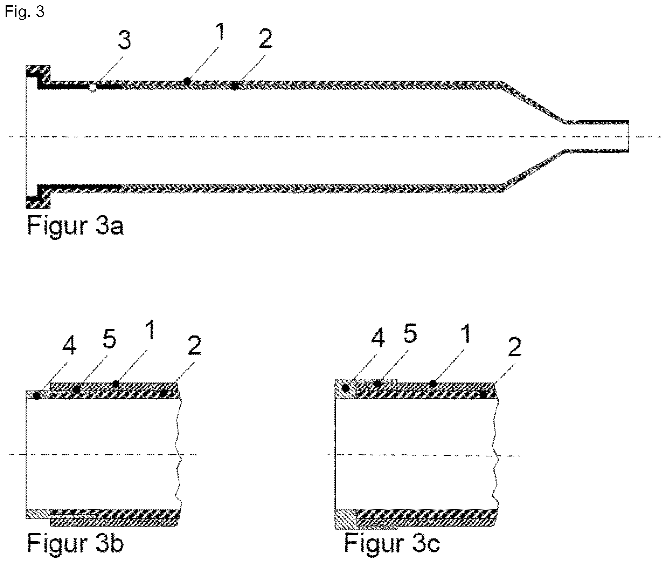

Beispielsweise kann durch Infiltration oder Beschichtung der äußeren Schicht aus Faserverbundkeramik mit einem Polymer, einer unporösen Keramik, Pyrokohlenstoff und/oder einem Metall (Figur 1 a und Figur 3 a) eine Versiegelung erreicht werden. Die versiegelten Bereiche dienen als Dichtflächen. Diese Variante kann bis zu einem Temperaturbereich von < 400 °C eingesetzt werden. Vorteilhaft wird das Verbundrohr lediglich im Randbereich zu dem metallischen Verbindungsstück beschichtet. "Randbereich" bedeutet der letzte Abschnitt vor dem

Übergang zu einem anderen Werkstoff, bevorzugt zu einem metallischen Werkstoff, mit einer Länge entsprechend dem 0,05- bis 10-fachem Innendurchmesser des Verbundrohres, bevorzugt entsprechend dem 0,1- bis 5-fachem Innendurchmesser, insbesondere entsprechend dem 0,2- bis 2-fachem Innendurchmesser. Die Dicke der Imprägnierung entspricht vorteilhaft der kompletten Schichtdicke der Faserverbundkeramik im Randbereich. Die Verfahren zur Imprägnierung sind dem Fachmann bekannt.

Die vorliegende Erfindung umfasst demnach ein mehrschichtiges Verbundrohr mit einem Wärmedurchgangskoeffizienten von > 1000 W/m$^2$/K beinhaltend mindestens zwei Schichten, eine innere Schicht aus unporöser monolithischer Oxid-Keramik, und eine äußere Schicht aus oxidischer Faserverbundkeramik, wobei die Dicke der Schicht aus monolithischer Oxid-Keramik von 0,5 mm bis 45 mm beträgt, wobei die gesamte Wandstärke aus mindestens zwei Schichten 1 mm bis 50 mm beträgt, wobei die Dicke der Schicht aus oxidischer Faserverbundkeramik weniger als 90 % der gesamten Wandstärke beträgt, wobei der Rohrinnendurchmesser des Verbundrohres 20 mm bis 1000 mm beträgt, wobei die zwei Schichten kraftschlüssig oder stoffschlüssig miteinander verbunden sind und ein Bauteil bilden und wobei unter "oxidischer Faserverbundkeramik" eine Matrix aus oxidischen keramischen Partikeln verstanden wird, die keramische, oxidische und/oder nicht-oxidische Fasern, enthält, und wobei die äußere Schicht des Verbundrohres im Randbereich vor dem Übergang zu einem anderen Werkstoff, bevorzugt metallischen Werkstoff, mit Polymer, unporöser Keramik, (Pyro-)Kohlenstoff und/oder metallischem Werkstoff imprägniert oder beschichtet ist.

Eine andere Möglichkeit der Versiegelung besteht vorteilhaft in dem Anbringen einer Hülse aus Metall an den Randbereich des mehrschichtigen Verbundrohres, die bereichsweise mit Hilfe eines Überlappstoßes (5), wie in der Figur 1b ersichtlich, zwischen der inneren und der äußeren Schicht angeordnet ist (Figur 1b). Vorteilhaft enthält die Hülse aus Metall einen oder mehrere der folgenden Werkstoffe: Chrom, Titan, Molybdän, Nickelstahl 47Ni, Legierung 80Pt20Ir, Legierung 1.3981, Legierung 1.3917 oder ein Trimetall Kupfer / Invar / Kupfer. Vorteilhaft liegt das Verhältnis der Länge des Überlappstoßes (5) zu dem Innendurchmesser des Verbundrohres im Bereich von 0,05 bis 10, bevorzugt von 0,1 bis 5, insbesondere von 0,2 bis 2. In diesem Bereich ist die Hülse aus Metall mit der Außenseite der inneren Schicht gasdicht verbunden mit Fügetechniken, die dem Fachmann bekannt sind (Informationszentrum Technische Keramik (IZTK): Brevier technische Keramik, Fahner Verlag, Lauf (2003)). Die äußere Schicht ist durch eine stoffschlüssige Verbindung mit der Hülse aus Metall verbunden. Vorteilhaft beträgt die Länge des keramischen Überlappes, d.h. der Bereich beinhaltend äußere Schicht und metallische Hülse ohne innere Schicht, vom 0,05-fachen bis zum 10-fachen, bevorzugt von 0,1-fachen bis zum 5-fachen, insbesondere von 0,2-fachen bis zum 2-fachen des Innendurchmessers des Verbundrohres.

Das Verbundrohr der vorliegenden Erfindung umfasst eine metallische gasführende Leitung, die in Längsrichtung des mehrschichtigen Verbundrohres, d.h. in Strömungsrichtung der Edukte, bereichsweise mit mindestens einer Schichten des Verbundrohres überlappt, wobei die innere keramische Schicht eine unporöse monolithische Oxid-Keramik beinhaltet und zumindest die äußere keramische Schicht eine oxidische Faserverbundkeramik beinhaltet.

Die Enden des mehrschichtigen Verbundrohres sind vorteilhaft auf ein Temperaturniveau thermostatisiert, das innerhalb der Grenzen der thermischen Beständigkeit der Imprägnierung oder Beschichtung, der Dichtung, der Metall-Keramik-Verbindung und der Metallhülse liegt. Vorteilhafte Bereiche sind: < 1000 °C (Wassserglas), < 500 °C (Löten / Glimmerdichtung), < 400 °C (Löten / Graphit), < 300 °C (Polymerdichtungen Kalrez), < 250 °C (Silikongummi, Viton). Die dafür geeigneten konstruktiven Lösungen und Prozessführungskonzepte sind dem Fachmann bekannt. Der mittlere Bereich, vorteilhaft zwischen 20 % und 99 % der Gesamtlänge, bevorzugt zwischen 50 % und 99 % der Gesamtlänge, insbesondere zwischen 90 % und 99 % der Gesamtlänge, des Verbundrohres ist in einer Heizkammer angeordnet und kann auf Temperaturen bis 1300 °C oder darüber aufgeheizt werden; vorteilhaft 900 °C bis 1700 °C, bevorzugt 1000 °C bis 1600 °C, insbesondere 1100 °C bis 1500 °C.

Das mehrschichtige Verbundrohr ist typischerweise vertikal angeordnet, an einem Ende fest und am anderen Ende lose gelagert. Vorzugsweise ist es am unteren Ende fest eingespannt und am oberen Ende in axialer Richtung verschiebbar geführt. In dieser Anordnung kann sich das Rohr spannungsfrei thermisch ausdehnen.

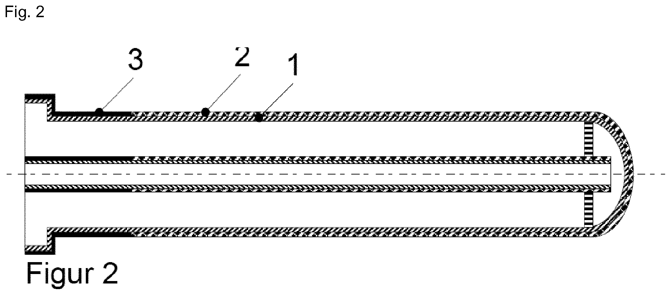

Eine Variante der Lösung besteht aus zwei konzentrischen Rohren (Figur 2). Das innere Rohr weist vorteilhaft einen Rohrinnendurchmesser von 10 mm bis 100 mm, bevorzugt 15 mm bis 50 mm, insbesondere 20 mm bis 30 mm, auf. Das innere Rohr ist vorteilhaft auf beiden Seiten offen und das äußere Rohr vorteilhaft einseitig verschlossen. Das äußere Rohr weist vorteilhaft einen Rohrinnendurchmesser von 20 mm bis 1000 mm, bevorzugt 50 mm bis 800 mm, insbesondere 100 mm bis 500 mm, auf. Am offenen Randbereich sind die Wände des inneren und des äußeren Rohres vorteilhaft versiegelt. Die Hauptreaktionsstrecke befindet sich vorteilhaft im Ringraum zwischen dem Innen- und dem Außenrohr. Dabei können die Reaktanden entweder in den Ringraum eingeleitet und der Produktstrom aus dem Innenrohr abgezogen werden oder umgekehrt. Die Anschlüsse für den Zulauf und den Ablauf befinden sich am offenen Rohrende. Das geschlossene Rohrende kann lose (ohne jede Führung) in den Heizraum ragen und dort ungehindert expandieren. Dadurch können in axialer Richtung keine temperaturinduzierten Spannungen entstehen. Durch diese Konfiguration wird gewährleistet, dass die mehrschichtigen Verbundrohre nur einseitig, im Kalten eingespannt und abgedichtet werden müssen und am geschlossenen Ende ungehindert die thermische Ausdehnung eingehen können. Die in Figur 1b, Figur 1c und Figur 1d gezeigten Optionen um das offene Ende zu versiegeln, sind auf diese Variante anwendbar.

Die vorliegende Erfindung umfasst somit einen Doppelrohr-Reaktor für endotherme Reaktionen, der dadurch gekennzeichnet ist, dass der Reaktor zwei mehrschichtige Verbundrohre mit einem Wärmedurchgangskoeffizient von > 1000 W/m$^2$/K beinhaltend mindestens jeweils zwei Schichten, eine innere Schicht aus unporösen monolithischem Oxid-Keramik und eine äußere Schicht aus oxidischer Faserverbundkeramik aufweist, wobei die Dicke der Schicht aus oxidischer Faserverbundkeramik von 0,5 mm bis 3 mm beträgt, wobei die Dicke der Schicht aus monolithischer Oxid-Keramik von 0,5 mm bis 45 mm beträgt, wobei die gesamte Wandstärke aus mindestens zwei Schichten 1 mm bis 50 mm beträgt, wobei die Dicke der Schicht aus oxidischer Faserverbundkeramik weniger als 90 % der gesamten Wandstärke beträgt, wobei der Rohrinnendurchmesser des Verbundrohres 20 mm bis 1000 mm beträgt, wobei die zwei Schichten kraftschlüssig oder stoffschlüssig miteinander verbunden sind und ein Bauteil bilden und wobei unter "oxidischer Faserverbundkeramik" eine Matrix aus oxidischen keramischen Partikeln verstanden wird, die keramische, oxidische und/oder nicht-oxidische Fasern, enthält, und wobei das eine Verbundrohr das andere Verbundrohr umschließt und das innere Verbundrohr auf beiden Seiten offen ist und das äußere Rohr einseitig verschlossen ist.

Durch den doppelschichtigen Aufbau kann die Dichtigkeit und Temperaturbeständigkeit eines Rohres aus monolithischer unporöser Keramik mit dem gutmütigen Versagensverhalten der Faserverbundkeramik ("Riss vor Bruch") kombiniert werden. Die erfindungsgemäße Vorrichtung mit versiegelten Randbereichen ermöglicht die gasdichte Anbindung der mehrschichtigen Verbundrohre an die konventionell ausgeführte Peripherie.

Vorteilhaft werden die erfindungsgemäßen keramischen mehrschichtigen Verbundrohre für folgende Prozesse eingesetzt:

- Herstellung von Synthesegas durch Reformierung von Kohlenwasserstoffen mit Wasserdampf und / oder CO$_2$.
- Koppelproduktion von Wasserstoff und Pyrolyse-Kohlenstoff durch die Pyrolyse von Kohlenwasserstoffen.
- Herstellung von Blausäure aus Methan und Ammoniak (Degussa) oder aus Propan und Ammoniak.
- Herstellung von Olefinen durch Wasserdampfspaltung von Kohlenwasserstoffen (Naphtha, Ethan, Propan).
- Kupplung von Methan zu Ethylen, Acetylen und zu Benzol.

Vorteilhaft werden die erfindungsgemäßen keramischen Verbundrohre als Reaktionsrohre in folgenden Anwendungen eingesetzt:

- Reaktoren mit axialer Temperaturkontrolle, wie

  ○ Wirbelschichtreaktoren,
  ○ Rohrbündelreaktoren,
  ○ Reformer- und Spaltöfen.

- Strahlrohre, Flammrohre.
- Gegenstromreaktoren.
- Membranreaktoren.
- Drehrohre für Drehrohröfen.

Weitere Ziele, Merkmale, Vorteile und Anwendungsmöglichkeiten ergeben sich aus den nachfolgenden Figuren.
Es zeigen:

Figur 1a        eine schematische Darstellung eines gasdichten mehrschichtigen Verbundrohres mit variablen Durchmesser,

Figur 1b/1c/1d    eine schematische Darstellung der Verbindungsstücke

Figur 2        eine schematische Darstellung einer Variante der Lösung besteht aus zwei konzentrischen Rohren

Figur 3a        eine schematische Darstellung eines gasdichten mehrschichtigen Sandwichrohres mit variablen Durchmesser,

Figur 3b/3c       eine schematische Darstellung der Verbindungsstücke

Folgende Abkürzungen werden verwendet:

1: Unporöse monolithische Keramik
2: Faserverbundkeramik
3: Versiegelter Bereich in der Faserverbundkeramik
4: Metallstutzen
5: Überlappstoß zwischen dem Metallstutzen und der unporösen monolithischen Keramik Beispiel 1 (Gegenbeispiel)

Der Prüfling war ein Rohr mit einer monolithischen Wand aus dichtem Korund (Produkt von Friatec mit der Produktnummer 122-11035-0) mit folgenden Abmessungen (Außendurchmesser x Innendurchmesser x Länge): 35mm x 29mm x 64mm. Der Wärmedurchgangskoeffizient der Rohrwand betrug, bezogen auf die Innenseite der Wand: $k_{loc}$ = 9200 (W/m$^2$/K). Das Rohr wurde der Flamme eines Schweißbrenners ausgesetzt. Der Schweißbrenner wurde mit Acetylen und Sauerstoff versorgt und mit einem Schweißeinsatz Typ Gr3, A, 6-9, S2,5bar ausgestattet. Die Flamme war neutral eingestellt mit einem stöchiometrischen Verhältnis λ=1,15 Luft/Acetylen. Die Brennerspitze wurde in einem Abstand von 50mm senkrecht auf die Rohrwand gerichtet. Nach ca. 3 Sekunden brach das Rohr. Damit war der Test beendet. Dieser Test bestätigte die Thermoschockempfindlichkeit monolithischer Keramiken.

Beispiel 2

Der Prüfling war ein Rohr mit einer zweischichtigen Wand. Die Wand des Kernrohrs bestand aus dichtem monolithischem Korund (Produkt von Friatec mit der Produktnummer 122-11035-0) mit folgenden Abmessungen (Außendurchmesser x Innendurchmesser x Länge): 35mm x 29mm x 64mm. Das Kernrohr war umwickelt mit einer Schicht aus Faserverbundkeramik (Keramikblech Typ FW12) mit einer Schichtdicke von ca. 1mm. Der Wärmedurchgangskoeffizient der Rohrwand betrug, bezogen auf die Innenseite der Wand: $k_{loc}$ = 3120 (W/m$^2$/K). Das Rohr wurde der Flamme eines Schweißbrenners ausgesetzt. Der Schweißbrenner wurde mit Acetylen und Sauerstoff versorgt und mit einem Schweißeinsatz Typ Gr3, A, 6-9, S2,5bar ausgestattet. Die Flamme war neutral eingestellt mit einem stöchiometrischen Verhältnis λ=1,15 Luft/Acetylen. Die Brennerspitze wurde in einem Abstand von 50mm senkrecht auf die Rohrwand gerichtet. Dabei bildete sich innerhalb 4 Sekunden auf der Außenwand des Rohres ein weiß glühender Fleck mit einer Länge von ca. 25mm (T > 1300°C). Die Flamme wurde nach 20 Sekunden vom Rohr weggenommen und 30 Sekunden später wieder für 20 Sekunden auf das Rohr gerichtet. Das Rohr überstand diesen Thermoschock unbeschädigt.

**Patentansprüche**

1. Mehrschichtiges Verbundrohr mit einem Wärmedurchgangskoeffizienten von > 1000 W/m$^2$/K, beinhaltend mindestens zwei Schichten, eine innere Schicht aus unporöser monolithischer Oxid-Keramik und eine äußere Schicht aus oxidischer Faserverbundkeramik, wobei die Dicke der Schicht aus oxidischer Faserverbundkeramik von 0,5 mm bis 3 mm beträgt, wobei die Dicke der Schicht aus monolithischer Oxid-Keramik von 0,5 mm bis 45 mm beträgt, wobei die gesamte Wandstärke aus mindestens zwei Schichten 1 mm bis 50 mm beträgt, wobei die Dicke der Schicht aus oxidischer Faserverbundkeramik weniger als 90 % der gesamten Wandstärke beträgt, wobei der Rohrinnendurchmesser des Verbundrohres 20 mm bis 1000 mm beträgt, wobei die zwei Schichten kraftschlüssig oder stoffschlüssig miteinander verbunden sind und ein Bauteil bilden und wobei unter "oxidischer Faserverbundkeramik" eine Matrix aus oxidischen keramischen Partikeln verstanden wird, die keramische, oxidische und/oder nicht-oxidische Fasern, enthält.

2. Mehrschichtiges Verbrundrohr nach Anspruch 1, **dadurch gekennzeichnet, dass** der Rohrinnendurchmesser des Verbundrohres 100 mm bis 1000 mm beträgt.

3. Mehrschichtiges Verbundrohr nach mindestens einem der Ansprüche 1 bis 2, **dadurch gekennzeichnet, dass** das Verbundrohr eine offene Porösität von $\epsilon < 5$ % aufweist.

4. Mehrschichtiges Verbundrohr nach mindestens einem der Ansprüche 1 bis 3, **dadurch gekennzeichnet, dass** die Dicke der Schicht aus Faserverbundkeramik weniger als 50 % der gesamten Wandstärke beträgt.

5. Mehrschichtiges Verbundrohr nach mindestens einem der Ansprüche 1 bis 3, **dadurch gekennzeichnet, dass** die Dicke der Schicht aus Faserverbundkeramik weniger als 25 % der gesamten Wandstärke beträgt.

6. Mehrschichtiges Verbundrohr nach mindestens einem der Ansprüche 1 bis 5, **dadurch gekennzeichnet, dass** das Elastizitätsmodul der unporösen monolithischen Oxid-Keramik größer ist als das Elastizitätsmodul der oxidischen Faserverbundkeramik.

7. Mehrschichtiges Verbundrohr nach mindestens einem der Ansprüche 1 bis 6, **dadurch gekennzeichnet, dass** der Wärmeleitfähigkeitskoeffizient der unporösen monolithischen Oxid-Keramik größer ist als der Wärmeleitfähigkeitskoeffizient der oxidischen Faserverbundkeramik.

8. Mehrschichtiges Verbundrohr nach mindestens einem der Ansprüche 1 bis 7, **dadurch gekennzeichnet, dass** als oxidische Faserverbundkeramik $SiC/Al_2O_3$, SiC/Mullit, $C/Al_2O_3$, C/Mullit, $Al_2O_3/Al_2O_3$, $Al_2O_3/Mullit$, $Mullit/Al_2O_3$ und/oder Mullit/Mullit eingesetzt wird.

9. Mehrschichtiges Verbundrohr nach mindestens einem der Ansprüche 1 bis 7, **dadurch gekennzeichnet, dass** als oxidische Faserverbundkeramik $Al_2O_3/Al_2O_3$, $Al_2O_3/Mullit$, $Mullit/Al_2O_3$ und/oder Mullit/Mullit eingesetzt wird.

10. Mehrschichtiges Verbundrohr nach mindestens einem der Ansprüche 1 bis 9, **dadurch gekennzeichnet, dass** die Fasern der oxidischen Faserverbundkeramik einen Durchmesser zwischen 10 und 12 $\mu$m haben.

11. Mehrschichtiges Verbundrohr nach mindestens einem der Ansprüche 1 bis 10, **dadurch gekennzeichnet, dass** das Verbundrohr im Randbereich vor einem Übergang zu einem anderen Werkstoff mit Polymer, einer unporösen Keramik, Pyrokohlenstoff und/oder metallischem Werkstoff imprägniert oder beschichtet ist.

12. Mehrschichtiges Verbundrohr nach mindestens einem der Ansprüche 1 bis 10, **dadurch gekennzeichnet, dass** mindestens eine Schicht des Verbundrohrs mit einer metallischen gasführenden Leitung in Längsrichtung bereichsweise überlappt.

13. Doppelrohr-Reaktor für endotherme Reaktionen, **dadurch gekennzeichnet, dass** der Reaktor zwei mehrschichtige Verbundrohre gemäß mindestens einem der Ansprüche 1 bis 12 aufweist, wobei das eine Verbundrohr das andere Verbundrohr umschließt und das innere Verbundrohr auf beiden Seiten offen ist und das äußere Rohr einseitig verschlossen ist.

14. Verwendung des mehrschichtigen Verbundrohres nach mindestens einem der Ansprüche 1 bis 12 bei der Herstellung von Synthesegas durch Reformierung von Kohlenwasserstoffen mit Wasserdampf und / oder Kohlenstoffdioxid, Koppelproduktion von Wasserstoff und Pyrolyse-Kohlenstoff durch die Pyrolyse von Kohlenwasserstoffen, Herstellung von Blausäure aus Methan und Ammoniak oder aus Propan und Ammoniak, Herstellung von Olefinen durch Wasserdampfspaltung von Kohlenwasserstoffen und/oder Kupplung von Methan zu Ethylen, Acetylen und zu Benzol.

15. Verwendung des mehrschichtigen Verbundrohres nach mindestens einem der Ansprüche 1 bis 12 als Reaktions-

## EP 3 297 971 B1

rohre in Reaktoren mit axialer Temperaturkontrolle, Gegenstromreaktoren, Membranreaktoren, Strahlrohre, Flammrohre, und/oder Drehrohre für Drehrohröfen.

**Claims**

1. A multilayer composite tube having a heat transfer coefficient of > 1000 W/m$^2$/K and comprising at least two layers, namely an inner layer of nonporous monolithic oxide ceramic and an outer layer of oxidic fiber composite ceramic, wherein the thickness of the layer of oxidic fiber composite ceramic is from 0.5 mm to 3 mm, wherein the thickness of the layer of monolithic oxide ceramic is from 0.5 mm to 45 mm, wherein the total wall thickness made up of at least two layers is 1 mm to 50 mm, wherein the thickness of the layer of oxidic fiber composite ceramic is less than 90% of the total wall thickness, wherein the tube internal diameter of the composite tube is 20 mm to 1000 mm, wherein the two layers are frictionally or adhesively joined to one another and form one component and wherein "oxidic fiber composite ceramic" is to be understood as meaning a matrix of oxidic ceramic particles comprising ceramic, oxidic and/or non-oxidic fibers.

2. The multilayer composite tube according to claim 1, wherein the internal tube diameter of the composite tube is 100 mm to 1000 mm.

3. The multilayer composite tube according to at least one of claims 1 to 2, wherein the composite tube has an open porosity of $\varepsilon$ < 5%.

4. The multilayer composite tube according to at least one of claims 1 to 3, wherein the thickness of the layer of fiber composite ceramic is less than 50% of the total wall thickness.

5. The multilayer composite tube according to at least one of claims 1 to 3, wherein the thickness of the layer of fiber composite ceramic is less than 25% of the total wall thickness.

6. The multilayer composite tube according to at least one of claims 1 to 5, wherein the modulus of elasticity of the nonporous monolithic oxide ceramic is greater than the modulus of elasticity of the oxidic fiber composite ceramic.

7. The multilayer composite tube according to at least one of claims 1 to 6, wherein the thermal conductivity of the nonporous monolithic oxide ceramic is greater than the thermal conductivity of the oxidic fiber composite ceramic.

8. The multilayer composite tube according to at least one of claims 1 to 7, wherein SiC/Al$_2$O$_3$, SiC/mullite, C/Al$_2$O$_3$, C/mullite, Al$_2$O$_3$/Al$_2$O$_3$, Al$_2$O$_3$/mullite, mullite/Al$_2$O$_3$ and/or mullite/mullite is used as the oxidic fiber composite ceramic.

9. The multilayer composite tube according to at least one of claims 1 to 7, wherein Al$_2$O$_3$/Al$_2$O$_3$, Al$_2$O$_3$/mullite, mullite/Al$_2$O$_3$ and/or mullite/mullite is used as the oxidic fiber composite ceramic.

10. The multilayer composite tube according to at least one of claims 1 to 9, wherein the fibers of the oxidic fiber composite ceramic have a diameter between 10 and 12 $\mu$m.

11. The multilayer composite tube according to at least one of claims 1 to 10, wherein the composite tube has been impregnated or coated with polymer, a nonporous ceramic, pyrolytic carbon and/or a metallic material in the peripheral region before a transition to another material.

12. The multilayer composite tube according to at least one of claims 1 to 10, wherein at least one layer of the composite tube overlaps at least in regions in the longitudinal direction with a metallic gas-conducting conduit.

13. A double-tube reactor for endothermic reactions, wherein the reactor has two multilayer composite tubes according to at least one of claims 1 to 12, where the one composite tube encloses the other composite tube and the inner composite tube is open at both ends and the outer tube is closed at one end.

14. The use of the multilayer composite tube according to at least one of claims 1 to 12 in the production of synthesis gas by reforming of hydrocarbons using steam and/or carbon dioxide, coproduction of hydrogen and pyrolysis carbon by pyrolysis of hydrocarbons, preparation of hydrocyanic acid from methane and ammonia or from propane and ammonia, preparation of olefins by steam cracking of hydrocarbons and/or coupling of methane to form ethylene, acetylene and to form benzene.

15. The use of the multilayer composite tube according to at least one of claims 1 to 12 as reaction tubes in reactors having axial temperature control, countercurrent reactors, membrane reactors, radiation tubes, flame tubes and/or rotary tubes for rotary tube furnaces.

**Revendications**

1. Tuyau composite multicouche doté d'un coefficient de transfert thermique > 1 000 W/m$^2$/K, contenant au moins deux couches, une couche interne composée de céramique d'oxyde monolithique non poreuse et une couche externe composée de céramique composite fibreuse oxydique, l'épaisseur de la couche composée de céramique composite fibreuse oxydique étant de 0,5 mm à 3 mm, l'épaisseur de la couche composée de céramique d'oxyde monolithique étant de 0,5 mm à 45 mm, l'épaisseur totale de paroi composée d'au moins deux couches étant de 1 mm à 50 mm, l'épaisseur de la couche composée de céramique composite fibreuse oxydique étant de moins de 90 % de l'épaisseur totale de paroi, le diamètre interne de tuyau du tuyau composite étant de 20 mm à 1 000 mm, les deux couches étant reliées l'une à l'autre par correspondance de force ou liaison de matière et formant un composant et, par « céramique composite fibreuse oxydique », on entend une matrice composée de particules céramiques oxydiques, qui contient des fibres céramiques, oxydiques et/ou non oxydiques.

2. Tuyau composite multicouche selon la revendication 1, **caractérisé en ce que** le diamètre interne de tuyau du tuyau composite est de 100 mm à 1 000 mm.

3. Tuyau composite multicouche selon au moins l'une des revendications 1 et 2, **caractérisé en ce que** le tuyau composite présent une porosité ouverte de $\varepsilon$ < 5 %.

4. Tuyau composite multicouche selon au moins l'une des revendications 1 à 3, **caractérisé en ce que** l'épaisseur de la couche composée de céramique composite fibreuse est de moins de 50 % de l'épaisseur totale de paroi.

5. Tuyau composite multicouche selon au moins l'une des revendications 1 à 3, **caractérisé en ce que** l'épaisseur de la couche composée de céramique composite fibreuse est de moins de 25 % de l'épaisseur totale de paroi.

6. Tuyau composite multicouche selon au moins l'une des revendications 1 à 5, **caractérisé en ce que** le modèle d'élasticité de la céramique d'oxyde monolithique non poreuse est supérieur au module d'élasticité de la céramique composite fibreuse oxydique.

7. Tuyau composite multicouche selon au moins l'une des revendications 1 à 6, **caractérisé en ce que** le coefficient de conductivité thermique de la céramique d'oxyde monolithique non poreuse est supérieur au coefficient de conductivité thermique de la céramique composite fibreuse oxydique.

8. Tuyau composite multicouche selon au moins l'une des revendications 1 à 7, **caractérisé en ce que** SiC/Al$_2$O$_3$, SiC/mullite, C/Al$_2$O$_3$, C/mullite, Al$_2$O$_3$/Al$_2$O$_3$, Al$_2$O$_3$/mullite, mullite/Al$_2$O$_3$ et/ou mullite/mullite est utilisé en tant que céramique composite fibreuse oxydique.

9. Tuyau composite multicouche selon au moins l'une des revendications 1 à 7, **caractérisé en ce que** Al$_2$O$_3$/Al$_2$O$_3$, Al$_2$O$_3$/mullite, mullite/Al$_2$O$_3$ et/ou mullite/mullite est utilisé en tant que céramique composite fibreuse oxydique.

10. Tuyau composite multicouche selon au moins l'une des revendications 1 à 9, **caractérisé en ce que** les fibres de la céramique composite fibreuse oxydique possèdent un diamètre compris entre 10 et 12 $\mu$m.

11. Tuyau composite multicouche selon au moins l'une des revendications 1 à 10, **caractérisé en ce que** le tuyau composite, dans la zone de bordure avant une transition vers un autre matériau, est imprégné ou revêtu avec un polymère, une céramique non poreuse, du pyrocarbone et/ou un matériau métallique.

12. Tuyau composite multicouche selon au moins l'une des revendications 1 à 10, **caractérisé en ce qu'**au moins une couche du tube composite se chevauche par endroits dans le sens de la longueur avec une conduite métallique conduisant des gaz.

13. Réacteur à double tube pour des réactions endothermes, **caractérisé en ce que** le réacteur présente deux tubes composites multicouches selon au moins l'une des revendications 1 à 12, l'un des tubes composites entourant l'autre tube composite et le tube composite interne étant ouvert des deux côtés et le tube externe étant fermé d'un côté.

14. Utilisation du tube composite multicouche selon au moins l'une des revendications 1 à 12 lors de la préparation de gaz de synthèse par reformage d'hydrocarbures avec de la vapeur d'eau et/ou du dioxyde de carbone, de la production couplée d'hydrogène et de carbone de pyrolyse par pyrolyse d'hydrocarbures, de la préparation de cyanure d'hydrogène à partir de méthane et d'ammoniac ou à partir de propane et d'ammoniac, de la préparation d'oléfines par craquage à la vapeur d'eau d'hydrocarbures et/ou du couplage du méthane pour donner de l'éthylène, de l'acétylène et pour donner du benzène.

15. Utilisation du tube composite multicouche selon au moins l'une des revendications 1 à 12 en tant que tubes de réaction dans des réacteurs avec contrôle axial de température, des réacteurs à contre-courant, des réacteurs à membrane, des tubes radiants, des tubes foyers et/ou des tubes rotatifs pour des fours à tube rotatif.

Fig. 1

Figur 1a

Figur 1b

Figur 1c

Figur 1d

Fig. 2

Figur 2

Fig. 3

Figur 3a

Figur 3b

Figur 3c

**IN DER BESCHREIBUNG AUFGEFÜHRTE DOKUMENTE**

**In der Beschreibung aufgeführte Patentdokumente**

- DE 2821595 A1
- DE 3907087 A1
- DE 102006038713 A1
- DE 102012219870 A1
- DE 102004049406 A1
- US 6733907 B
- US 2015078505 A
- US 5881775 A
- US 20120003128 A
- JP 2003053166 B
- US 4222977 A
- US 5707584 A
- DE 1995105401

**In der Beschreibung aufgeführte Nicht-Patentliteratur**

- **M. KUNTZ.** Risswiderstand keramischer Faserverbundwerkstoffe. Shaker Verlag, 1996
- **ECKEL et al.** *NASA Technical Memorandum, Wyoming,* 12. September 1989
- **HALLUM et al.** *NASA Technical Memorandum, Chicago, Illinois,* 27. April 1986
- Konstruktionselemente des Maschinenbaues, Teil 1. Grundlagen; Verbindungselemente. **W. TOCHTERMANN ; F. BODENSTEIN.** Gehäuse, Behälter, Rohrleitungen und Absperrvorrichtungen. Springer-Verlag, 1979
- **DARKEN, L. S. ; GURRY, R. W.** Physicalchemistry of metals. McGraw-Hill, 1953
- Wärmedurchgang, VDI-Wärmeatlas. 1997
- *Referenz:Nextel™ Ceramic Textiles Technical Notebook,* 2004
- **SCHMÜCKER, M.** *Faserverstärkte oxidkeramische Werkstoffe, Materialwissenschaft und Werkstofftechnik,* 2007, vol. 38 (9), 698-704
- **LAUF.** Informationszentrum Technische Keramik (IZTK): Brevier technische Keramik. Fahner Verlag, 2003